# EUROPÄISCHE PATENTSCHRIFT

(11) **EP 3 063 469 B1**
(45) Veröffentlichungstag und Bekanntmachung des Hinweises auf die Patenterteilung: **21.03.2018**
(21) Anmeldenummer: 14793810.4
(22) Anmeldetag: 23.10.2014
(51) Int. Cl.: F21V 21/03, F21V 23/06, H02G 3/20

(54) **VORRICHTUNG ZUM ANSCHLUSS ELEKTRISCHER LEUCHTEN MIT FEHLSTROMABLEITUNG**
DEVICE FOR THE CONNECTION OF ELECTRICAL LUMINAIRES WITH FAULT CURRENT DIVERSION
DISPOSITIF DE RACCORDEMENT DE LAMPES ÉLECTRIQUES À DÉRIVATION DU COURANT DE FUITE

(30) Priorität: 31.10.2013 DE 202013010245 U; 22.07.2014 DE 202014006057 U
(43) Veröffentlichungstag der Anmeldung: 07.09.2016
(73) Patentinhaber: Filuxx Systems GmbH, 65520 Bad Camberg (DE); Lopaska, Stefan, 65520 Bad Camberg (DE); Fischer, Hans Richard, 58802 Balve-Eisborn (DE)
(72) Erfinder: LOPASKA, Stefan, 65520 Bad Camberg (DE); FISCHER, Hans Richard, 58802 Balve-Eisborn (DE)
(74) Vertreter: Patentanwälte Dörner & Kötter PartG mbB
(86) Internationale Anmeldenummer: PCT/EP2014/072770
(87) Internationale Veröffentlichungsnummer: WO 2015/062972

(56) Entgegenhaltungen:
- DE-A1- 2 730 859
- DE-A1- 19 700 730
- DE-U1- 9 012 349
- FR-A1- 2 821 149
- FR-A1- 2 953 905

## Beschreibung

Die Erfindung betrifft eine Vorrichtung zum Anschluss elektrischer Leuchten mit Fehlstromableitung nach dem Patentanspruch 1.

Vorrichtungen zum Anschluss elektrischer Leuchten sind in vielfältiger Weise bekannt (vgl. bspw. DE 20 2005 004 333 U1). Bei solchen Vorrichtungen zum Anschluss von Deckenleuchten ist unter anderem gefordert, dass sowohl ein elektrischer als auch mechanischer Anschluss vorgesehen ist. Es ist weiterhin vorgeschrieben, dass berührbare Metallteile der Steckdose, die im Falle eines Isolationsfehlers unter Spannung stehen können, dauerhaft und zuverlässig mit der Schutzleiter-Anschlussklemme der Steckdose verbunden sein müssen.

Für diesen Anwendungsfall ist beispielsweise aus der WO 98/30836 A1 eine Deckensteckdose für Deckenleuchten bekannt, bei der die vorgenannten Anforderungen dadurch erfüllt sind, dass die Aufhängevorrichtung mit einem umklappbaren Haken versehen ist, weicher mit dem Schutzleiter der Aufhängevorrichtung verschraubt ist. Infolgedessen ist hierbei die geforderte Fehlstromableitung vorhanden.

Die Normen in ihrer jüngsten Fassung erfordern jedoch beim Anschluss von elektrischen Leuchten das Verwenden von Steckelementen, die mit einem genormten Stecker gemäß DIN-EN 61995-2 anschließbar sind. Auch hierbei ist es jedoch erforderlich, dass Fehlströme über den Schutzleiter abgeleitet werden, um das Sicherheitsrisiko beim Anschluss der Leuchte zu reduzieren. Bei den bekannten Lösungen ist dieser Anforderung nicht Genüge getan, da beispielsweise beim Anschluss von Kronleuchtern mit Metallketten oder sonstigen berührbaren Leuchtenteilen aus Metall im Falle von nicht erkannten Beschädigungen am Stromkabel eine Übertragung des Stroms auf die vorhandenen Metallteile, beispielsweise auf die Ketten, erfolgen kann. Die dadurch hervorgerufenen Fehlströme sind erst beim / nach Einschalten der Leuchte nachweisbar. Das Sicherheitsrisiko der bekannten Vorrichtungen ist daher erheblich.

Bei den bekannten und im Handel angebotenen Leuchten-Anschlüssen, sind auch bei solchen, die Bezug auf die Normen nehmen, Lösungen, die die Voraussetzungen der DIN-EN 61 995 Teil 1 Nr. 11 - Schutzleiteranschluss 11.3 erfüllen, nicht vorhanden. Vielmehr beinhalten diese Leuchten-Anschlüsse, vergleichbar dem bisherigen Stand der Technik mit Lüsterklemme und Haken, ebenfall lediglich eine elektrische Steckverbindung und getrennt davon einen Haken. Der eigentliche Ansatz der in Kraft getretenen Normen, für den Laien das Anschließen von Leuchten sicherer zu machen, wird bei diesen angebotenen Produkten nicht erfüllt.

Hier will die Erfindung Abhilfe schaffen. Der Erfindung liegt die Aufgabe zugrunde, eine Vorrichtung zum Anschluss elektrischer Leuchten zu schaffen, die die Anforderungen der Normen erfüllt. Gemäß der Erfindung wird diese Aufgabe dadurch gelöst, dass ein Steckkörper zur Aufnahme eines Steckers gemäß DIN-EN 61 995-2 einsteckbar ist, der über den Schutzleiterkontakt mit der mechanischen Aufhängevorrichtung verbunden ist.

Mit der Erfindung ist eine Vorrichtung zum Anschluss elektrischer Leuchten geschaffen, die den Normen entspricht. Sie ist daher geeignet, Fehlströme abzuleiten und damit die Anforderungen an die Sicherheit bzw. Unfallverhütung zu erfüllen. Dies ist dadurch bewirkt, dass jedes für den Einbau geeignete Betriebsmittel (Einbaudose) mit einem Sockeladapter versehen ist, der zentrisch am Boden der Einbaudosen mit Schrauben befestigt ist. Bekannte, im Handel erhältliche Einbaudosen sind entweder mit eingegossener Schraubmutter oder außen mit einem Stahlbügel versehen, der mittig ein Schraubgewinde aufweist. Der Anschluss, einerseits mit der elektrischen Gebäudeinstallation, andererseits mit der in der DIN-Norm geforderten Steckverbindung mit den darin angeordneten Bauteilen erfolgt außerhalb der Einbaudose. Erst nach diesem Anschließen werden die zu der erfindungsgemäßen Vorrichtung zusammengefügten und vorinstallierten Bauteile in die Einbaudose eingesteckt und mit dem Sockeladapter über die Verbindungsdome mit Schrauben verbunden. Gleichzeitig ist die Vorrichtung geeignet, die vorgesehene Steckverbindung unter Verwendung der genormten Stecker zu ermöglichen. Bei diesem Anschlussverfahren erfolgt eine Installationserleichterung, besonders für den Fall, dass Anschlüsse mit Drahtquerschnitten von 2,5mm² erforderlich werden, da diese wegen der besonderen Dicke des Kabels besonders schwer zu handhaben sind und sich daher sehr leicht aus den Verbindungen lösen können

Bei Verwendung unterschiedlicher, im Handel erhältlicher Einbaudosen, mit unterschiedlichen Einbautiefen, erfolgt die mechanische Vorinstallation derart, dass zu den Bauteilen der Vorrichtung gehörende Verbindungsdome, mit angepassten Längen, die Verbindung zwischen Sockeladapter und den übrigen Bauteilen herstellen, so dass immer ein gleicher Abschluss mit dem Rand der Einbaudose sichergestellt ist.

Der Einbau der Bauteile zu einem normgerechten Stecksystem erfolgt auf der Grundlage, dass sowohl der mechanische als auch elektrische Anschluss in der Vorrichtung eigenfunktional vorhanden sind, zwischen diesen jedoch zur Ableitung möglicher Fehlströme eine integrierte Verbindung hergestellt ist. Die Norm schreibt dieses vor - mit der Erfindung ist diese Lösung geschaffen.

Zentrales Bauteil der Vorrichtung ist ein Trägersockel, mit dem alle andere Bauteile verbunden sind. Auf dem Trägersockel liegt der metallische Trägereinsatz zur Aufnahme des umklappbaren Hakens und einer abgewinkelten Kontaktschiene. Zur Befestigung der gesamten Vorrichtung sind in dem Trägereinsatz Löcher für die Schrauben angebracht. Aufliegend auf dem Trägersockel befindet sich eine Trägerplatte mit Steckereinschubkanal. Trägerplatte und Steckereinschubkanal bilden eine Einheit. An der Unterseite des Trägersockels, am Schraubendurchbruch, befinden sich Steckführungen für das Einführen und Platzieren der Verbindungsdome, durch die das gesamte System mit dem Sockeladapter verbunden wird. Die Verbindung zwischen Trägersockel und Trägerplatte erfolgt über gegenüber liegende Führungsstege zu Führungsnuten und Raststegen zu Rastnuten.

Der Steckereinschubkanal ist an beiden Enden offen. Am oberen Ende ist der Steckereinschubkanal fest verbunden mit der Trägerplatte und am unteren Ende, versehen mit Verbindungszapfen, zur Aufnahme des Steckkörpers für die elektrische Verbindung.

In Weiterbildung der Erfindung ist der Schutzkontakt des Steckkörpers, mittig und bodenseitig verbunden, mit einer Metallfahne versehen, die mit 90 Grad abgewinkelt, außen anliegend am Steckereinschubkanal aus dem Steckkörper herausragt, so dass diese direkt auf die Kontaktschiene des Trägereinsatzes zeigt, sobald der Steckkörper mit dem Steckereinschubkanal verbunden ist.

Nach Verbindung der Metallfahne des Steckkörpers mit der Kontaktschiene des Trägereinsatzes mittels eines Verbindungsschuhes ist die Verbindung zwischen dem mechanischen Bereich und dem Schutzleiter-Bereich hergestellt. Auftretende Fehlströme, von der Leuchte über den Haken, den Trägereinsatz, die Kontaktschiene, den Verbindungsschuh und über die Metallfahne zum Schutzleiter des Steckkörpers, können jederzeit, Gefahr verhindernd und entsprechend der Vorgaben DIN-EN 61 995-1, abgeleitet werden.

Die Abschirmung der Strom führenden Teile (Metallteile) erfolgt mittels Wandflächen und Kunststoffstegen, die die Berührung der Metallteile von außen verhindern, indem sie einen Führungskanal bilden. Diese befinden sich an der Unterseite des Trägersockels, der Außenseite des Steckereinschubkanals und am Steckkörper, beidseitig von der Metallfahne.

In Weiterbildung der Erfindung ist die Vorrichtung zum Anschluss elektrischer Deckenleuchten mit einem flach gehaltenen Abdeckring versehen, der mit Raststegen versehen ist, die mittels Rastnuten an der Abdeckplatte verrastet werden. Bei Nichtgebrauch eines Deckenanschlusses für Leuchten kann in den Abdeckring eine Abdeckplatte eingesteckt werden, so dass, im Vergleich zu bisherigen Brennstellen (Leuchtenanschlussstellen) mit Lüsterklemme und Haken, ein ästhetischer Anblick vorliegt.

In Weiterbildung der Erfindung ist die Vorrichtung zum Anschluss elektrischer Wandleuchten gem. DIN-EN 61 995-1 und 2 vorgesehen. Dies erfolgt dergestalt, dass Installationskabel in handelsübliche Einbaudosen aus der Wand hervortreten. Diese Einbaudosen sind mit einem Abschlussdeckel versehen, der in den Schraubholmen der Einbaudose verschraubt wird. Im Vergleich zu Decken-Einbaudosen sind die seitlich angebrachten Schraubholme um ca. 2 mm verkürzt, was bewirkt, dass der Abschlussdeckel "in" die Einbaudose eingesetzt wird und somit stets ein bündiger Wandabschluss erreicht wird. Mittig besitzt der Abschlussdeckel eine Öffnung mit angespritztem Steckereinschubkanal und Verrastung. Der Einschubkanal ist beidseitig offen und an der Gegenseite zum Abschlussdeckel mit Verbindungszapfen zur Aufnahme des Steckkörpers für die elektrische Verbindung versehen. Als Gegenstück zur Verrastung mit dem Steckkörper sind hier Rasteinschuböffnungen angebracht. Auch hier wird die Einbaudose in die Wand eingebaut. Die elektrische Verkabelung erfolgt außerhalb der Einbaudose. Diese wird dann - Abschlussdeckel, Steckereinschubkanal und verkabelter Steckkörper - mittels Dosenschrauben als Abschlussdeckel auf der Einbaudose wandbündig verschraubt. Die Metallfahne und die Kunststoffstege als Berührungsschutz werden bei Verrastung in einen Abschirmschacht eingeschoben.

Ausführungsbeispiele der Erfindung sind in den nachfolgenden Zeichnungen gezeigt. Es zeigen:
- Figur 1: die explosionsartige Darstellung der erfindungsgemäßen Vorrichtung;
- Figur 2: die perspektivische Darstellung einer Einbaudose;
- Figur 3: die Außenansicht eines fertig montierten Anschlusssystems gem. Figur 1;
- Figur 4: die Darstellung der die Fehlstromableitung bildenden Teile;
- Figur 5: einen Sockeladapter mit Distanzstück;
- Figur 6: die Darstellung eines Verbindungsdoms;
- Figur 7: einen Trägersockel mit den Funktionslöchern gem. Figur 1;
- Figur 8: einen Trägereinsatz mit Schraublöchern für die Systembefestigung und Kontaktschiene;
- Figur 9: die Darstellung eines umklappbaren Einschub-Hakens;
- Figur 10: eine Trägerplatte mit Steckereinschubkanal;
- Figur 11: einen Steckkörper für die elektrische Verbindung mit Metallfahne / Kontaktfeder und Kunststoffstegen als Berührschutz;
- Figur 12: einen Verbindungsschuh zur Verbindung vor Kontaktschiene und Metallfahne;
- Figur 13: einen Abdeckring und eine Abdeckplatte gem. Figur 1;
- Figur 14: einen Leuchtenstecker gem. DIN-EN 995 -1 mit Kabelzugang;
- Figur 15: die explosionsartige Darstellung einer Vorrichtung zum Anschluss elektrischer Wandleuchten mit Einbaudose, Wanddosendeckel mit Steckereinschubkanal und Dosenschrauben gem. Figur 13;
- Figur 16: den Korpus eines Steckkörpers in anderer Ausgestaltung;
- Figur 17: einen Trägersockel in anderer Ausgestaltung;
- Figur 18: einen Sockeladapter in anderer Ausgestaltung;
- Figur 19: einen Verbindungsdom in anderer Ausgestaltung;
- Figur 20: einen Verstärkungs-Ring während des Einbaus und
- Figur 21: eine Einbaudose in montierter Lage mit Verstärkungs-Ring.

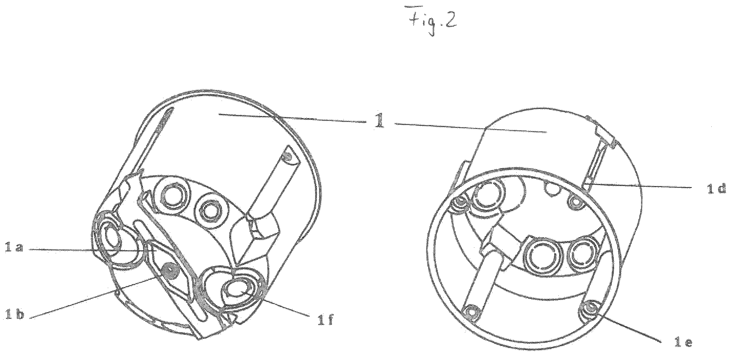

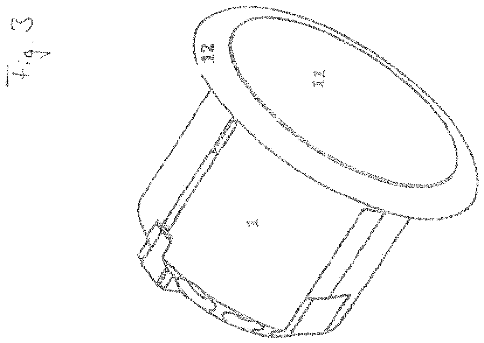

Die Figuren zeigen in einer Explosionsanordnung alle Systemteile einer Vorrichtung für Leuchtenanschlüsse unter Wohnraumdecken in einer Hohlraumdecke (1), die in montiertem Zustand die übrigen Einbauteile des Systems aufnimmt. Hierzu zählen die als Figuren 2 bis 19 dargestellten Einzelteile einer Vorrichtung, die sowohl den in den Normen DIN-EN 61995 Teil 1 und 2 geforderten, sowohl elektrischen, als auch mechanischen Anschlüssen bei Leuchtenanschlusssystemen entspricht.

Die Hohlraumdose (1) ist in bekannter Weise ausgebildet und besteht als Isolationsabgrenzung zur Wand oder Gebäudedecke folglich aus Kunststoff. Seitlich am Boden der Dose sind verschlossene Perforationsstellen (1f) mit auszubrechenden Öffnungen angebracht, durch die im Bedarfsfall die Kabel der Gebäudeinstallation eingeführt werden können. In den bekannten, im Handel erhältlichen Einbaudosen (Hohlraumdosen oder Betoneinbaudosen) sind entweder mittig Schrauben eingegossen oder von außen mit einem Befestigungsbügel (1a) mit zentrisch angebrachtem Schraubgewinde (1b) versehen, so dass hier im Innern der Einbaudose der Systembezogene Sockeladapter (2) des Systems zentrisch eingelegt und mit einer Schraube (3a) befestigt wird.

Die Darstellung in Figur 2 zeigt eine Einbaudose (1) mit einem Stahlbügel (1a) mit Schraubgewindedurchbruch (1b) - z.B. bei Hohldeckendosen, die bekanntermaßen mit Spreizbügeln (1d) versehen sind und mit Dosenschrauben, die Spreizbügel hinter der Decke befestigen. Die Schraubholme (1e) befinden sich im Innern der Einbaudose. Der Abschluss der Dose ist verstärkt und wirkt als unterer Gegendruckpunkt zu den Spreizbügeln (1 d) bei der Befestigung. Bei Betoneinbaudosen entfällt diese Prozedur, da diese Dosen ihren Halt in der Betondecke finden, in die sie eingegossen wurden.

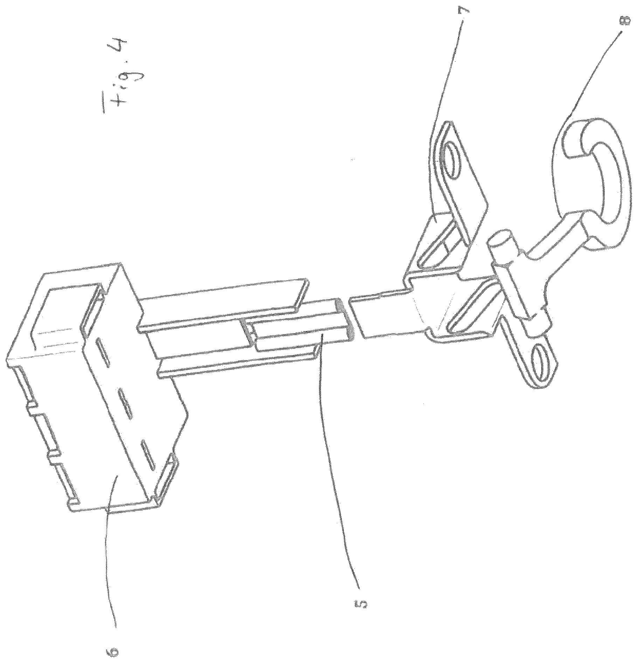

In Figur 4 ist dargestellt, wie die Ableitung von möglichen Fehlströmen erfolgt, die in unerkannt defekten Deckenleuchten mit Metallübergängen auftreten. Eine Fehlstromableitung kann nur erfolgen, wenn zwischen der mechanischen Aufhängevorrichtung (Haken) (8) des Leuchtenanschlusses und der Schutzleiterfunktion des Anschlusssystems eine Verbindung hergestellt ist, die Fehlströme ableitet oder den FI-Schalter der Hausinstallation aktiviert und die Stromversorgung kontrolliert unterbricht.

In der Darstellung nach Figur 4 wird die Leuchte am Haken (8) aufgehängt. Dieser ist nur bei Gebrauch ausgeklappt und liegt in den Langlöchern (7c) des Trägereinsatzes (7). Über die Kontaktschiene (7a) wird die Verbindung über den Verbindungsschuh (5) zu der Metallfahne (6a) des Kontaktblocks (6) hergestellt, die unmittelbar mit dem Schutzleiter der Hausinstallation verbunden ist. Auf diese Weise ist ein Höchstmaß an Sicherheit hergestellt und verhindert, dass Fehlstromeinwirkungen auf den Benutzer erfolgen.

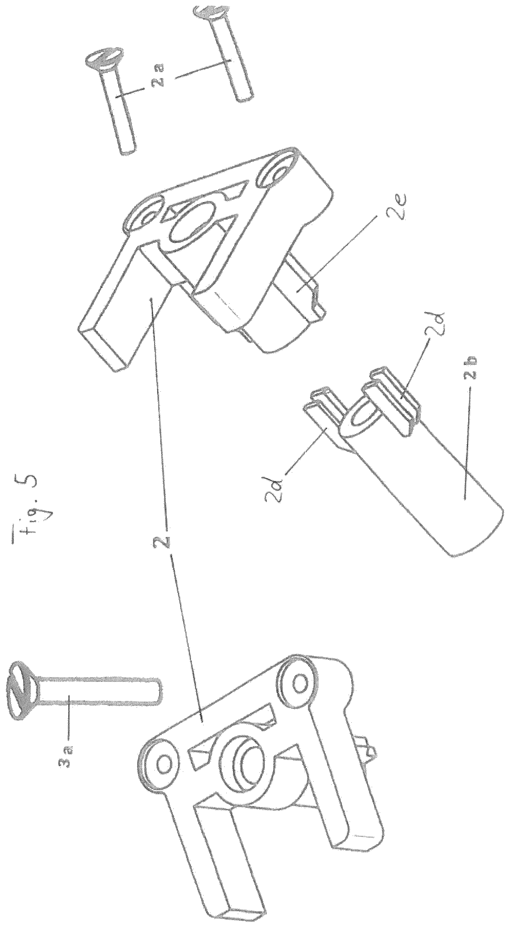

Der in Figur 5 dargestellte Sockeladapter (2) bietet die Gewähr für die Montage in allen im Handel erhältlichen Einbaudosen. Bekanntermaßen sind alle Einbaudosen gem. Figur 2 mit einer zentrisch eingegossenen Schraubmutter bzw. einem Stahlbügel mit Schraubgewinde versehen. Die Dosentiefen sind jedoch unterschiedlich und können mittels eines Distanzstücks zum Dosenadapter (2b) die unterschiedlichen Dosentiefen ausgleichen, so dass immer eine einheitliche Einbautiefe gegeben ist. Der Dosenadapter (2b) ist mit Führungen (2d) versehen, die mit Stegen (2e) am Sockeladapter (2) korrespondieren. Des Weiteren ist durch den Sockeladapter sichergestellt, dass die elektrische Installation des Systems vor dem eigentlichen Einbau in die Einbaudose erfolgen kann und die verwendeten Kabelenden (15c) im hinteren Bereich der Einbaudose Platz finden und nicht beim Einschieben des Gesamtsystems und Befestigen an dem Sockeladapter (2) gequetscht bzw. beschädigt werden. Die Verbindung vom Sockeladapter zum Einbaudosenboden erfolgt mittels einer Schraube (3a).

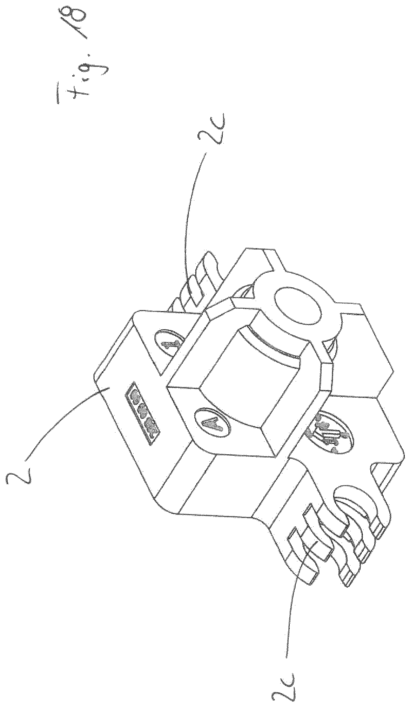

Eine alternative Ausführung des Sockeladapters (2) ist in Figur 18 dargestellt. Erkennbar sind bei dieser Ausführung außen Aufnahmen (2c) vorgesehen, die an ihren freien Enden offen ausgebildet sind. Zudem sind die Aufnahmen (2c) mit Schlitzen versehen.

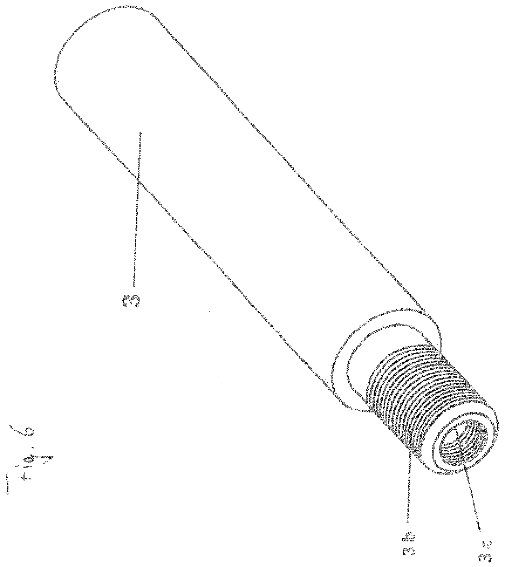

Figur 6 zeigt Verbindungsdome (3), die sowohl die Verbindung zwischen dem Sockeladapter (2) und dem Trägersockel (4) herstellen als auch unterschiedliche Abstände zwischen dem Sockeladapter (2) und dem Trägersockel (4) ausgleichen. Die Befestigung der einzelnen Systemteile kann sowohl mittels eingeschnittener Schraubgewinde (3b) als auch mittels eingepresster Gewindehülsen (3c) erfolgen. Die unterschiedlichen Längen der Verbindungsdome (3) sind jeweils auf die im Handel erhältlichen Einbaudosen abgestimmt.

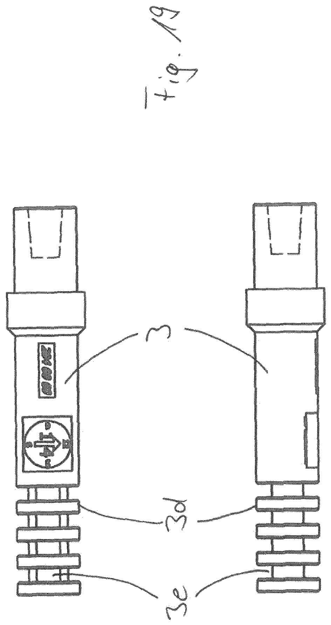

Eine alternative Ausführung der Verbindungsdome (3) ist in Figur 19 dargestellt. Bei dieser Ausführung weisen die Verbindungsdome (3) an ihrem einen Ende Rasten (3d) auf, mit denen eine Anpassung an verschiedene Höhen von Einbaudosen (1) erfolgen kann. Dies erfolgt durch die Korrespondenz der Rasten (3d) mit den Schlitzen in den Aufnahmen (2c) des Sockeladapters (2). Je nach ausgewählter Einstecktiefe der Verbindungsdome (3) ist die Bauhöhe der erfindungsgemäßen Vorrichtung einstellbar. Die Verbindungsdome (3) weisen zwischen den Rasten (3d) Einschubverjüngungen (3e) auf. Die Einschubverjüngungen (3e) ermöglichen ein Einführen der Verbindungsdome (3) durch die offenen Enden in den Aufnahmen (2c). Nach Passieren der offenen Enden werden die Verbindungsdome (3) um 90° gedreht, so dass sie gegen selbstständiges Herausgleiten aus den Aufnahmen (2c) gesichert sind.

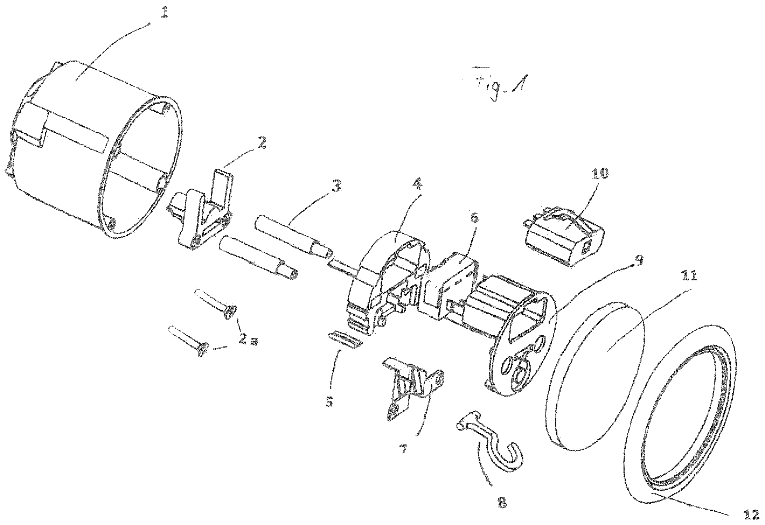

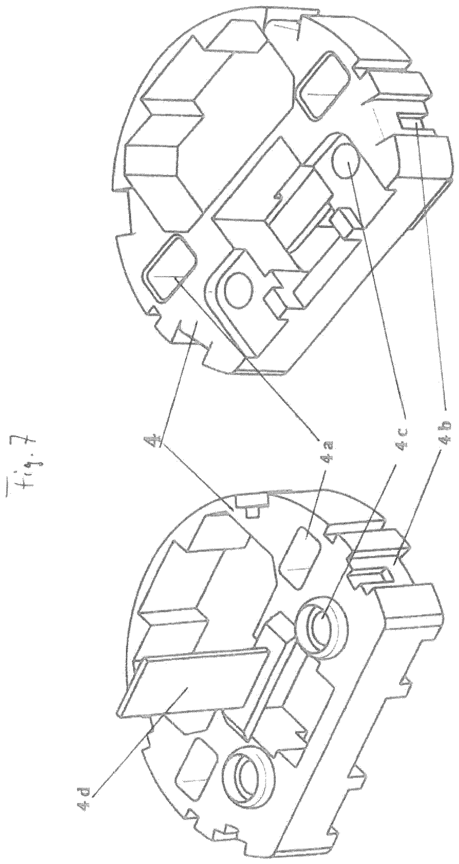

Figur 7 zeigt den Trägersockel (4) als zentrales Bauteil des Systems mit den Funktionen gem. Figur 1. Mit dem Trägersockel (4) sind alle Funktionsteile des Systems verbunden, also sowohl die mechanische Aufhängung, die elektrischen Verbindungselemente als auch die Fehlstromableitung gem. Figur 4.

Als mechanisches Trageelement liegt der metallische Trägereinsatz (7) zur Aufnahme des umklappbaren Hakens (8) und die abgewinkelte Kontaktschiene (7a) auf dem Trägersockel (4). Zur Befestigung der gesamten Vorrichtung sind in dem Trägersockel (4) Löcher (4c) für die Schrauben (2a) angebracht. Aufliegend auf dem Trägersockel (4) befindet sich eine Trägerplatte (9) mit Steckereinschubkanal (9a). Trägerplatte (9) und Steckereinschubkanal (9b) bilden eine Einheit. An der Unterseite des Trägersockels (4), am Schraubendurchbruch (4c) befinden sich Steckführungen für das Einführen und Platzieren der Verbindungsdome (3), durch die das gesamte System mit dem Sockeladapter (2) verbunden wird. Die Verbindung zwischen Trägersockel (4) und Trägerplatte (9) erfolgt über gegenüber liegende Führungsstege (9d) zu Führungsnuten (4b) und Raststegen (9b) zu Rastnuten (4a). Des Weiteren ist an der Unterseite des Trägersockels als Berührungsschutz ein Kunststoffsteg (4d) angebracht, der in Ergänzung zu der Rückseite des Steckereinschubkanals (9a) und den Kunststoffstegen (6b) des Steckkörpers (6) den Berührungsschutz in Form eines Durchgangskanals für die Fehlstromableitung bilden.

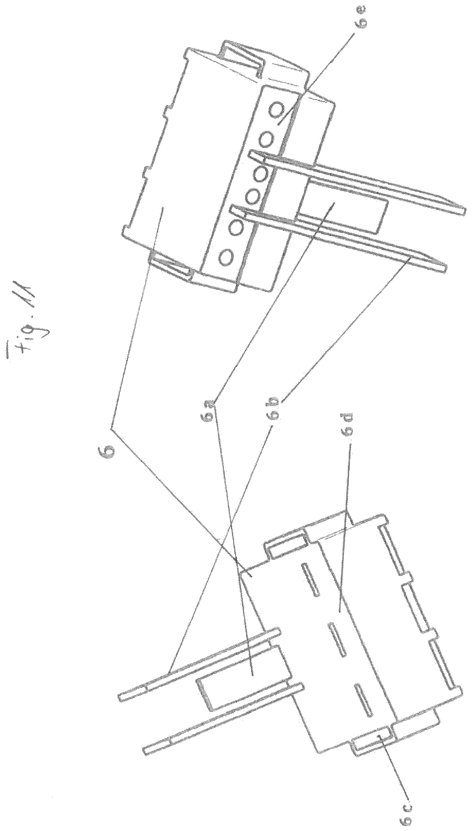

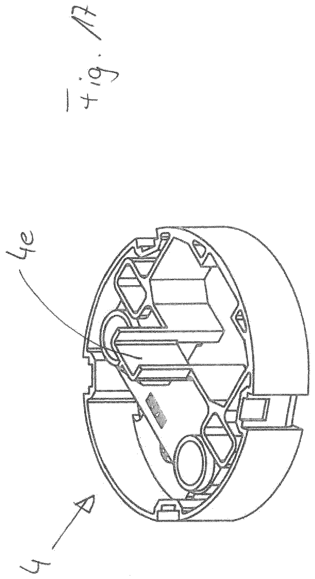

Eine alternative Ausführung des Trägersockels (4) ist in Figur 17 dargestellt. Bei dieser Ausführung ist an dem Trägersockel (4) ein Kanal (4e) angeordnet, der die Funktion der Kunststoffstege (6b) in Figur 11 übernimmt. Aus dieser Ausbildung ergeben sich fertigungstechnische Vorteile, die einerseits eine höhere Präzision der Bauteilabmessungen, andererseits eine höhere Stabilität zur Folge haben.

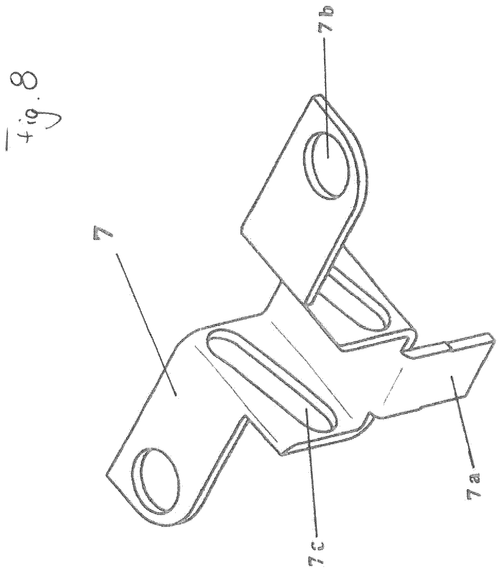

Figur 8 zeigt den Trägereinsatz (7) mit Schraublöchern (7b) für die Systembefestigung und die Kontaktschiene (7a) als Verbindung zu der Metallfahne (6a) des Steckkörpers (6). Über die Schraublöcher des Trägereinsatzes (7) wird das gesamte System über die Verbindungsdome (3) mit dem Sockeladapter (2) verbunden und mit Schrauben (2a) befestigt.

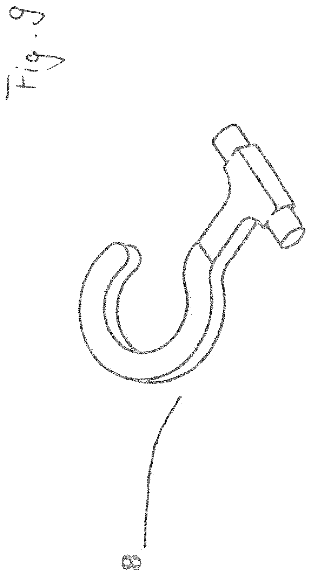

Figur 9 zeigt den umklappbaren Haken (8). In ungenutztem Zustand ist der Haken eingeklappt und eingeschoben, wie dies bereits in der WO 98/30836 A1 offenbart ist. In diesem Zustand liegt der Haken (8) in einem Klemmkanal (9f) für den Haken in der Trägerplatte (9).

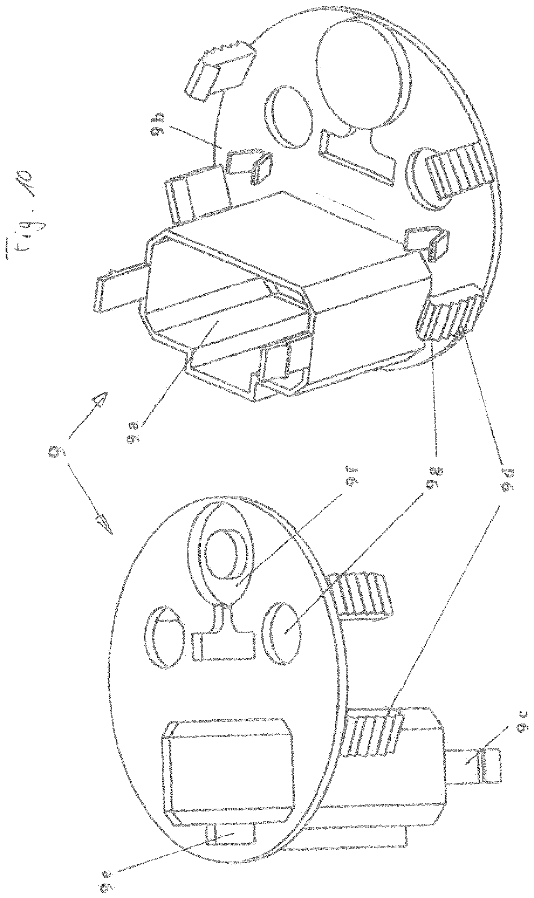

Figur 10 zeigt die Trägerplatte (9) mit Steckereinschubkanal (9a) mit Rastzapfen (9c) und weiteren Funktionszugängen wie, Führungsstegen (9b), Raststegen (9d), Schraublöchern (9g) sowie Durchbruch und Klemmkanal des Hakens (9f). Mit den Führungsstegen (9b) wird die Trägerplatte (9) auf dem Trägerstück (4) in deren Führungsnuten (4a) befestigt, wodurch die festsitzende Verbindung hergestellt wird.

Über den Steckkörper (6), wie er in Figur 11 dargestellt ist, wird die elektrische Verbindung der Gebäudeinstallation mit der Leuchte hergestellt. Dieses erfolgt über die erfindungsgemäße Vorrichtung zum Anschließen von Wand- und Deckenleuchten und entspricht der DIN-EN 61 995 - 2. Mit Hilfe des Steckkörpers besteht die Möglichkeit, den gem. DIN-EN 61 995 vorgeschriebenen Stecker (10) einzustecken und so die elektrische Verbindung zwischen Gebäudeinstallation und Wohnraumleuchte herzustellen. Neben der rein elektrischen Verbindung ist der Steckkörper (6) gem. der Erfindung mit einer Metallfahne (6a) dergestalt ergänzt, dass auch die Forderungen der DIN-EN 61 995 -2 erfüllt werden, indem berührbare Metallteile einer Leuchte, die im Falle eines Isolationsfehlers unter Spannung stehen können, dauerhaft und zuverlässig mit der Schutzleiter-Anschlussklemme der Steckdose verbunden sind. Diese Lösung erfolgt über die Metallfahne (6a) die aus dem Steckkörper (6) herausragt und im 90-Grad-Winkel abgelenkt ist und somit direkt auf die Kontaktschiene (7a) des Trägereinsatzes (7) gerichtet ist. Die Metallfahne (6a) wird mit einem Berührungsschutz abgeschirmt, so wie oben in Bezug auf Figur 7 ausgeführt, indem die Abschirmung über den Kunststoffsteg 4d, die Kunststoffstege 6b und den Steckereinschubkanal 9a gewährleistet wird.

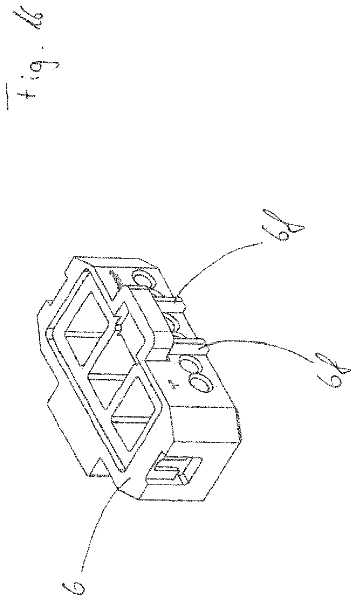

Eine alternative Ausführung des Steckkörpers (6) ist in Figur 16 dargestellt. Bei dieser sind an der Außenseite zusätzlich zwei Stege (6f) vorgesehen. Die Stege (6f) rufen eine Erhöhung um ca. 3 mm hervor, was die Isolationsfestigkeit der Oberfläche, also die Kriechstrecke, erhöht.

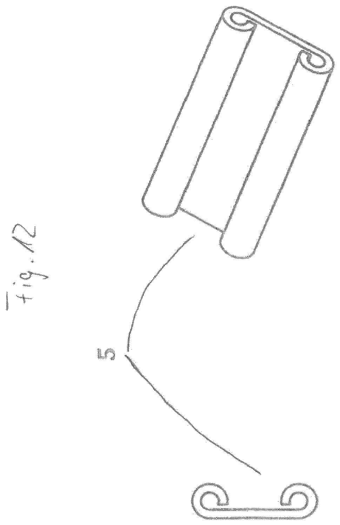

Figur 12 zeigt den Verbindungsschuh (5), der die Verbindung zwischen Kontaktschiene (7a) und Metallfahne (6a) herstellt und somit die Fehlstromableitung gewährleistet.

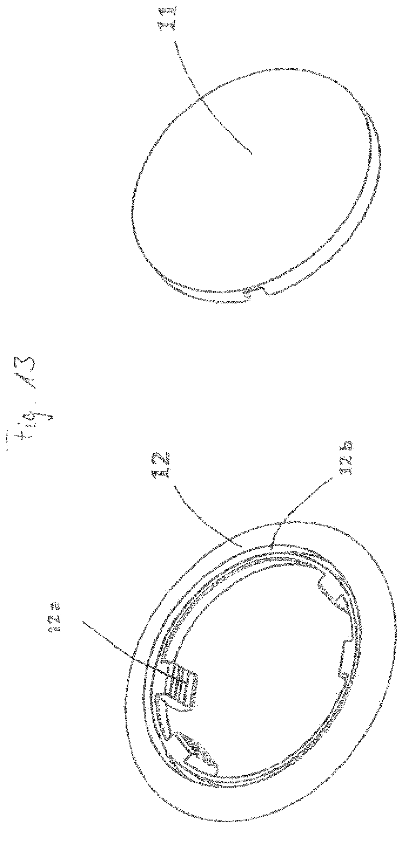

Figur 13 zeigt den Abdeckring (12) und die Abdeckplatte (11). Der Abdeckring (12) schließt die Vorrichtung nach außen ab, womit gewährleistet ist, dass sowohl die Einbaudose (1) als auch das installierte Anschlusssystem keine offen liegenden und berührbaren Flächen aufweist. Der Abdeckring hat Rastzapfen (12a), die an den Außenseiten der Raststege (9d) der Trägerplatte (9) passgenau anliegen und somit einen sicheren Verschluss bilden. Das Lösen des Abdeckringes (12) von der Trägerplatte (9) ist danach nur mittels eines Werkzeuges (Schraubendrehers) möglich.

Bei Nichtgebrauch eines Deckenanschlusses für Leuchten kann in den Abdeckring (12) in eine umlaufenden Rille (12b) des Abdeckringes die Abdeckplatte (11) eingesteckt werden, so dass im Vergleich zu bisherigen Brennstellen (Leuchtenanschlussstellen) mit Lüsterklemme und Haken, ein ästhetischer Anblick vorliegt.

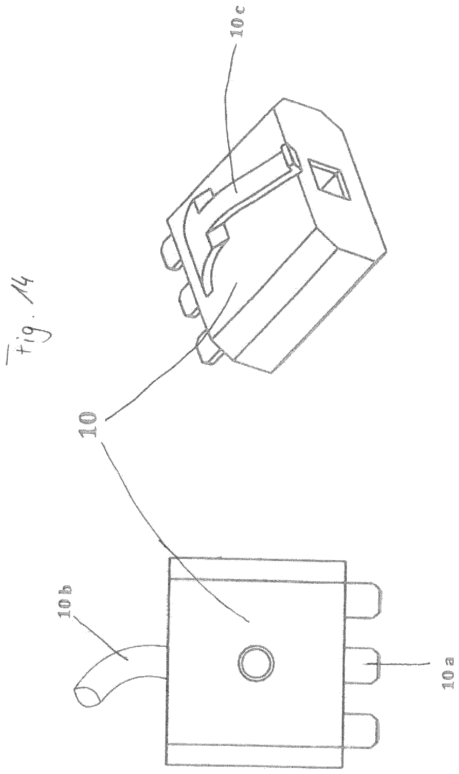

Figur 14 zeigt den 3-poligen Leuchtenstecker (10) gem. DIN-EN 61 995 -1 mit Kabelzugang (10b) und Verrastung (10c) zum Steckereinschubkanal (9a), einschließlich der Pole (10a).

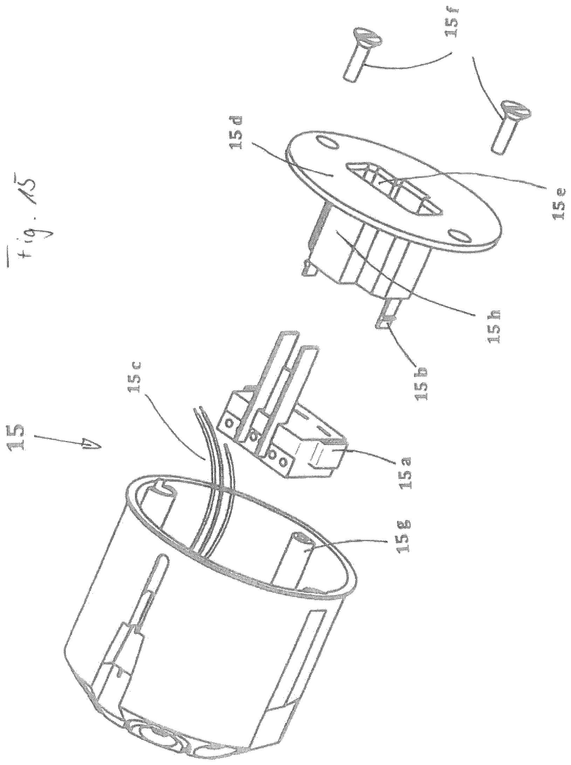

Figur 15 zeigt in einer explosionsartigen Darstellung eine Vorrichtung zum Anschluss elektrischer Wandleuchten in eine Einbaudose, bei der eine handelsübliche Wandeinbaudose (15) in der Wand mittels der Spreizbügel (1d) befestigt wurde. Kabelenden (15c) treten durch die ausgebrochenen Perforationsöffnungen (1f) aus der Wanddose heraus. Die abisolierten Kabelenden (15c) werden an den Steckkörper (6) angeschlossen, der mit den Rastnasen (15b) in die Rasteinschuböffnungen (15a) des Einschubkanals eingeschoben wird und somit fest verbunden ist. Hierdurch ist gewährleistet, dass das Gesamtsystem, bestehend aus Wanddosendeckel (15d) mit Einschubkanal (15e), einschließlich des aufgesteckten Steckkörpers (6) mittels der Schrauben (15f) in den Schraubholmen (15g) wandbündig installiert werden kann. Die Schraubholme (15g) sind um 2 mm verkürzt, so dass der Wanddosendeckel (15d) wandbündig eingelegt ist. Die mit dem Steckkörper (6) verbundene Metallfahne (6a) und die Kunststoffstege (6b) werden aus Gründen des Berührungsschutzes in einen Führungskanal (15h) eingeschoben, der fest mit dem Wanddosendeckel verbunden ist, an der Unterseite geöffnet ist und seitlich an dem Einschubkanal (15e) anliegt.

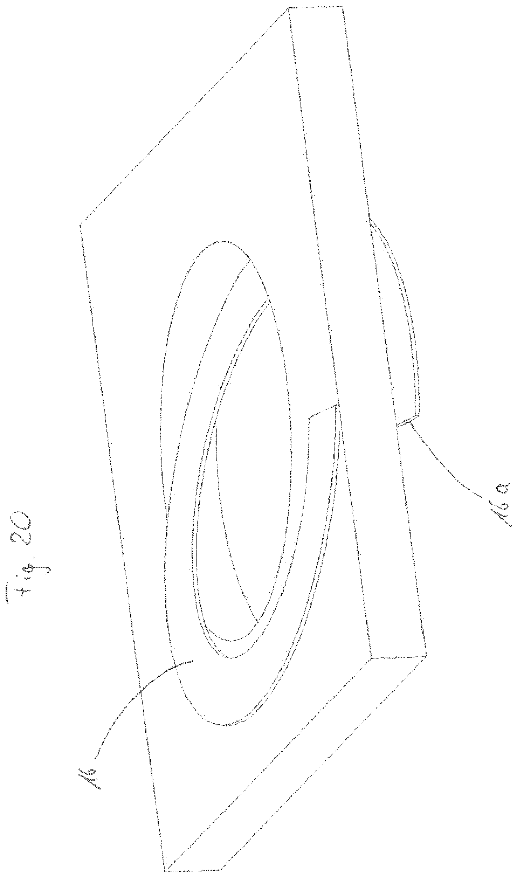

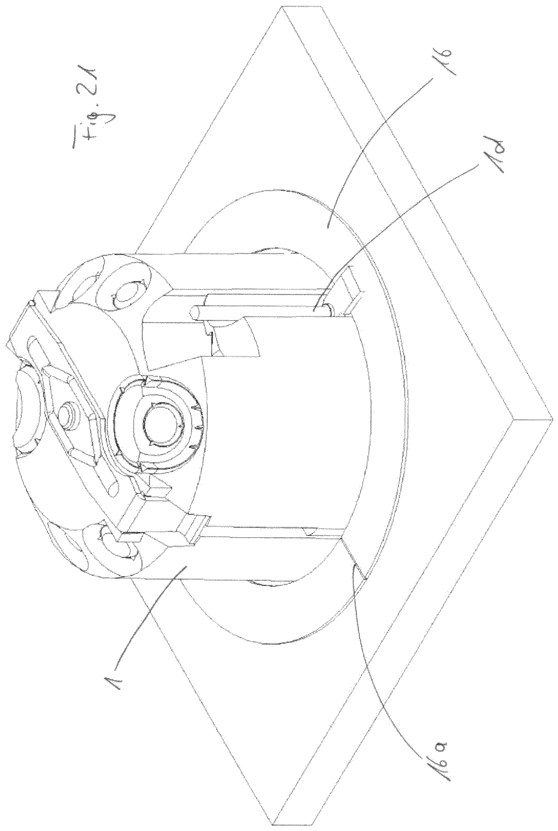

In Figur 20 ist eine Verstärkung zur Verbesserung der Stabilität beim Einbau der erfindungsgemäßen Vorrichtung insbesondere bei Hohlwänden oder Hohlraumdecken dargestellt. Die Verstärkung besteht aus einem Ring (16), der aus Metall, Kunststoff, Holz usw, hergestellt sein kann. Der Ring (16) ist mit einem Schlitz (16a) versehen. Der Innendurchmesser des Rings (16) entspricht im Wesentlichen dem Außendurchmesser der Einbaudose (1) in unmittelbarer Nähe des Abdeckrings (12). Zur Anbringung des Rings (16) wird dieser durch die in der Wand oder Decke vorgesehene Öffnung auf die Rückseite der Wand oder Decke positioniert. Zur Montage wird die Einbaudose (1) durch die Öffnung in die Wand oder Decke eingeführt. Da der Ring (16) die Öffnung umgibt, können sich die Spreizbügel (1d) auf dem Ring (16) abstützen, wie dies in Figur 21 dargestellt ist. Der Ring (16) vergrößert die Abstützfläche der Einbaudose (1), so dass die Gefahr eines Ausreißens der Öffnung in der Wand oder Decke, insbesondere beim Anschließen schwerer Leuchten oder Kronleuchter wesentlich reduziert ist.

## Patentansprüche

1. Vorrichtung zum Anschluss elektrischer Leuchten mit Fehlstromableitung, umfassend einen Trägersockel (4) und einen Trägereinsatz (7) mit einer Kontaktschiene (7a), die eine Trägerverbindung mit einem umklappbaren Haken (8) herstellt, **dadurch gekennzeichnet, dass** der Trägersockel und der Trägereinsatz von einer Trägerplatte (9) überdeckt sind und mit einem Steckereinschubkanal (9a) versehen ist und der Steckkörper (6) unterhalb des Steckereinschubkanals (9a) rastbar verbunden ist und der Steckereinschubkanal (9a) mittels einer Kontaktschiene (7a) schleifend, starr oder mittels eines Verbindungsschuhs (5) mit einer Metallfahne (6a) verbunden ist und diese in dem Steckkörper (6) unterhalb des Steckereinschubkanals (9a) eingesetzt ist, dass der Steckkörper (6) außen mit der Metallfahne (6a) versehen ist, die aus dem Steckkörper (6) herausragt, und an dem Steckkörper (6) Kunststoffstege (6b) angebracht sind, die als Rückwand an dem Trägersockel (4) und dem Steckereinschubkanal (9a) anliegend zum Führungskanal ausgebildet sind, und einen abgeschirmten Raum bilden, in dem die Kontaktschiene (7a) und die Metallfahne (6a) starr, schleifend oder mittels Verbindungsschuh (5) zusammentreffen und einen sicheren Stromfluss gewährleisten, und dass durch den Einschubkanal (9a) ein Leuchtenstecker (10) in den Steckkörper (6) gem. DIN-EN 61 995-2 einsteckbar ist.

2. Vorrichtung nach Anspruch 1, **dadurch gekennzeichnet, dass** die Metallfahne (6a) starr, als Feder oder als Verbindungsschuh (5) ausgeprägt ist.

3. Vorrichtung nach Anspruch 1, **dadurch gekennzeichnet, dass** der Einschubkanal (9a) mit der Trägerplatte (9) fest verbunden ist.

4. Vorrichtung nach Anspruch 1, **dadurch gekennzeichnet, dass** der Einschubkanal (9a) mit der Trägerplatte (9) über Rastzapfen (9a) mit den Rasteinschuböffnungen des Steckkörpers (6c) fest oder aufgesetzt verbunden ist.

5. Vorrichtung nach Anspruch 4, **dadurch gekennzeichnet, dass** der Steckkörper (6) an zwei Seiten mit Rastvorrichtungen versehen ist, die eine Aufrastung an den Sockeladapter (2) und an den Einschubkanal (9a) ermöglichen.

6. Vorrichtung nach Anspruch 1, **dadurch gekennzeichnet, dass** das System mit einem Wanddosendeckel (15d) einer Wandeinbaudose (1), mit Dosenschrauben (15f) verbunden, eine Einheit bildet und den wandbündigen Einbau von Wandleuchten gem. DIN-EN 61 995-2 zulässt.

## Claims

1. Device for the connection of electric luminaires with fault-current diversion, comprising a carrier base (4) and a carrier insert (7) with a contact rail (7a) which creates a carrier connection with a rotating hook (8), **characterised in that** the carrier base and the carrier insert are covered over by a carrier plate (9) which is fitted with a duct (9a) for the insertion of a plug, and the plug body (6) engages by a catch beneath the plug-insertion duct (9a) and the plug-insertion duct (9a) is connected by a sliding or rigid connection or by means of a connecting shoe (5) to a metal lug (6a) via a contact rail (7a), which metal lug is inserted in the plug body (6) beneath the plug-insertion duct (9a), that the plug body (6) is fitted on the outside with the metal lug (6a), which projects outwards from the plug body (6), and plastic webs (6b) are arranged on the plug body (6) which are formed as a rear wall on the carrier base (4) and the plug-insertion duct (9a) resting against the guiding duct, and form a screened space in which the contact rail (7a) and the metal lug (6a) meet by means of a sliding or rigid connection or by means of a connecting shoe (5) and ensure a safe and reliable flow of current, and that a lamp plug (10) can be inserted through the insertion duct (9a) into the plug body (6) in accordance with DIN-EN 61 995-2.

2. Device in accordance with claim 1, **characterised in that** the metal lug (6a) is a rigid salient contact formed either as a spring or a connecting shoe (5).

3. Device in accordance with claim 1, **characterised in that** the insertion duct (9a) is joined permanently to the carrier plate (9).

4. Device in accordance with claim 1, **characterised in that** the insertion duct (9a) with the carrier plate (9) is joined permanently or attached by means of engaging tappets (9a) to the engaging openings in the plug body (6c).

5. Device in accordance with claim 4, **characterised in that** the insertion body (6) is fitted on two sides with engaging devices which permit engagement with the base adapter (2) and the insertion duct (9a).

6. Device in accordance with claim 1, **characterised in that** the system is connected to the cover (15d) of a flush-fitted wall socket (1), fastened by means of socket screws (15f), forms a single unit and permits the fitting of wall lamps flush with the wall in accordance with DIN-EN 61 995-2.

## Revendications

1. Dispositif de raccordement de lampes électriques à dérivation du courant de fuite, comprenant un socle porteur (4) et un insert porteur (7) avec languette de contact (7a) établissant une liaison porteuse avec un crochet (8) repliable, **caractérisé en ce que** le socle porteur et l'insert porteur sont recouverts par une plaque support (9) et munis d'un canal d'insertion (9a) de fiche, et **en ce que** le corps d'enfichage (6) est relié par clipsage en dessous du canal d'insertion (9a) de fiche, et **en ce que** le canal d'insertion (9a) de fiche est relié au moyen d'une languette de contact (7a), par frottement, de manière rigide ou via un sabot de liaison (5), avec une languette métallique (6a) et **en ce que** cette dernière est mise en place dans le corps d'enfichage (6) situé en dessous du canal d'insertion (9a) de fiche, **en ce que** le corps d'enfichage (6) est muni à l'extérieur de la languette métallique (6a) faisant saillie hors du corps d'enfichage (6) et que contre le corps d'enfichage (6) sont fixées des nervures en plastique (6b) configurées en paroi arrière contre le socle porteur (4) et le canal d'insertion (9a) de fiche par rapport au canal de guidage, et forment un volume protégé dans lequel la languette de contact (7a) et la languette métallique (6a) se rejoignent de manière rigide, par frottement ou au moyen d'un sabot de liaison (5) et garantissent une circulation sûre du courant, et **en ce qu'**à travers le canal d'insertion (9a) il est possible d'enficher une fiche mâle (10) de lampe dans le corps d'enfichage (6) conformément à DIN EN 61 995-2.

2. Dispositif selon la revendication 1, **caractérisé en ce que** la languette métallique (6a) est configurée rigide, sous forme de ressort ou de sabot de liaison (5).

3. Dispositif selon la revendication 1, **caractérisé en ce que** le canal d'insertion (9a) est fermement relié à la plaque support (9).

4. Dispositif selon la revendication 1, **caractérisé en ce que** la plaque support (9) du canal d'insertion (9a) est reliée fermement ou par superposition, via des tenons de clipsage (9a) avec les orifices d'insertion et clipsage que présente le corps d'enfichage (6c).

5. Dispositif selon la revendication 4, **caractérisé en ce que** le corps d'enfichage (6) est muni de dispositifs de clipsage sur deux côtés, qui permettent un clipsage contre l'adaptateur (2) de socle et contre le canal d'insertion (9a).

6. Dispositif selon la revendication 1, **caractérisé en ce que** le système avec un couvercle (15d) de boîte murale (1), relié au moyen de vis (15f) de boîte, forme une unité et permet l'incorporation, en affleurement avec le mur, d'appliques murales conformément à DIN EN 61 995-2.
